# EUROPEAN PATENT SPECIFICATION

(11) **EP 3 176 500 B1**
(45) Date of publication and mention of the grant of the patent: **30.12.2020**
(21) Application number: 16201409.6
(22) Date of filing: 30.11.2016
(51) Int. Cl.: F21S 43/14, F21S 43/239, F21S 43/243, F21S 43/249

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 04.12.2015 IT UB20156264
(43) Date of publication of application: 07.06.2017
(73) Proprietor: MARELLI AUTOMOTIVE LIGHTING ITALY S.p.A., 10078 Venaria Reale (TO) (IT)
(72) Inventor: SVETTINI, Marco, 10078 Venaria Reale (TO) (IT); PARONI, Sara, 10078 Venaria Reale (TO) (IT)
(74) Representative: Mitola, Marco

(56) References cited:
- DE-A1-102012 107 437
- US-A1- 2008 013 333
- US-A1- 2009 201 698
- US-A1- 2014 029 284
- US-A1- 2014 071 703

## Description

### FIELD OF APPLICATION

The present invention relates to a lighting device for vehicles, such as an automotive light, or the like.

### PRIOR ART

The expression "automotive light" means either an automotive rear light or an automotive front light, the latter also known as headlight or headlamp.

As known, an automotive light is a lighting and/or signaling device of a vehicle comprising at least one light external to the vehicle having the function of illuminating and/or signaling towards the outside of the vehicle, such as for example a position light, a turn signal, a brake light, a rear fog lamp, a reversing lamp, a dipped beam headlamp, a main beam headlamp and the like.

However, for the purposes of the present invention, the expression "lighting device" means not only an automotive light, as described above, but also further lighting and/or signaling devices for vehicles, such as ceiling lights or the like.

Thus, in the scope of the present invention, lighting device for vehicles means any lighting and/or signaling device of a vehicle comprising at least one light having the function of illuminating and/or signaling.

However, reference will be made hereinafter to an automotive light without because of this losing in generality.

The lighting device, in its simplest generalization, comprises a container body, a lenticular body and at least one light source.

The lenticular body is arranged to close the mouth of the container body so as to form a housing chamber. The light source is arranged inside the housing chamber and may be faced so as to emit light towards the lenticular body, when it is powered with electricity.

More sophisticated lighting devices further comprise optical systems associated to the light source. In particular, optical systems are known in the prior art provided with a light guide plate, comprising a light inlet surface facing the light source, typically comprising a plurality of LEDs, acronym of light-emitting diodes, mounted on an electronic base and a ribbon-shaped light outlet surface. Lighting devices for vehicles comprising a light guide plate and LEDs are known from US2014/0071703 A1 and US2009/0201698 A1.

In particular, in the lighting sector, such a ribbon-shaped light outlet surface must be able to emit light evenly both along the main direction, with respect to which given photometric needs must be met, and along angled directions with respect to such main direction, e.g. for reasons of appearance.

Considering a main direction parallel to a vehicle axis X-X of a motor vehicle, such need may be conventionally satisfied by arranging parabolic reflectors at the light inlet surface of the light guide, so as to direct the light towards the vehicle axis X and towards the angled direction by means of side pointing optics obtained on a reflecting face of the parabolic reflector itself. However, such side pointing optics are difficult to make, e.g. due to lack of space or for design constraints.

A further conventional approach is to incline the axis of each reflector with a progressive angular increment, for example, of a few degrees with respect to the previous axis of the reflector. However, empirical tests have demonstrated that a reflector having an axis inclined with respect to the vehicle axis X may continue to direct light along the vehicle axis X, providing that its axis forms an angle smaller than approximately 30° with the vehicle axis X. If such a condition did not occur, the reflector would not be able to direct light along the vehicle axis X because the light reflected by the reflector along the direction of the vehicle axis X would cause total internal reflection (TIR) on the light outlet surface of the light guide plate.

### PRESENTATION OF THE INVENTION

So, the prior art solutions are not very satisfying. Indeed, a light outlet surface designed to emit light along a main direction may appear uneven along a different direction, or vice versa.

The need is thus felt to make a lighting device capable of emitting light evenly along different directions at the same time.

Such limits are solved by a lighting device according to claim 1.

Other embodiments of the lighting device according to the invention are described in the following claims.

### DESCRIPTION OF THE DRAWINGS

Further features and advantages of the present invention will be more understandable from the following description of preferred embodiments given by way of nonlimiting examples, in which:

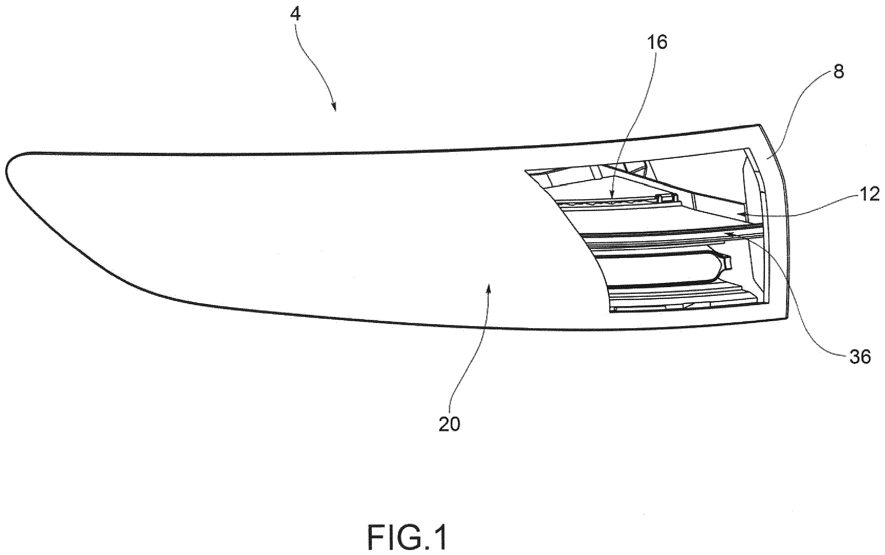

- figure 1 is a perspective view, in assembled configuration, of a lighting device according to an embodiment of the present invention;

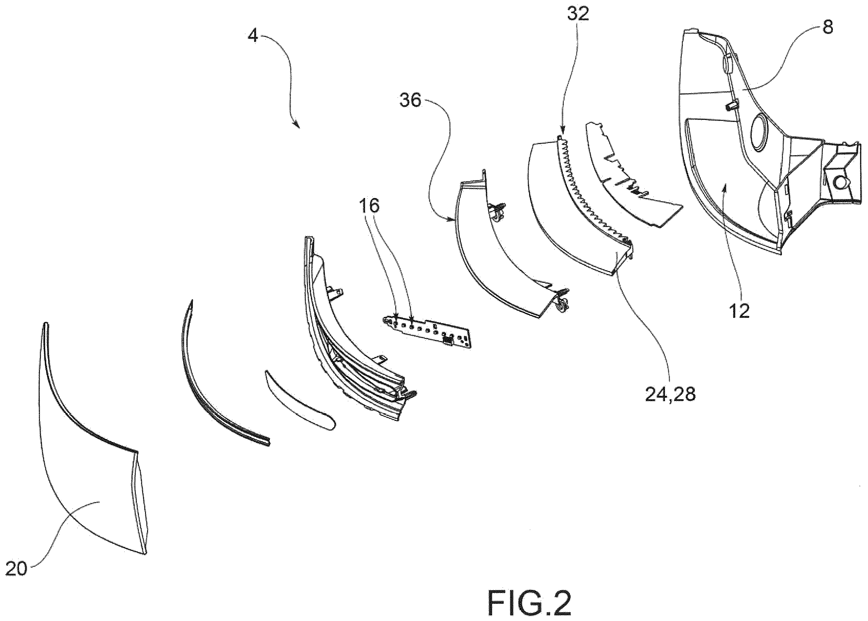

- figure 2 is a perspective view, with parts separated, of the lighting device in figure 1;

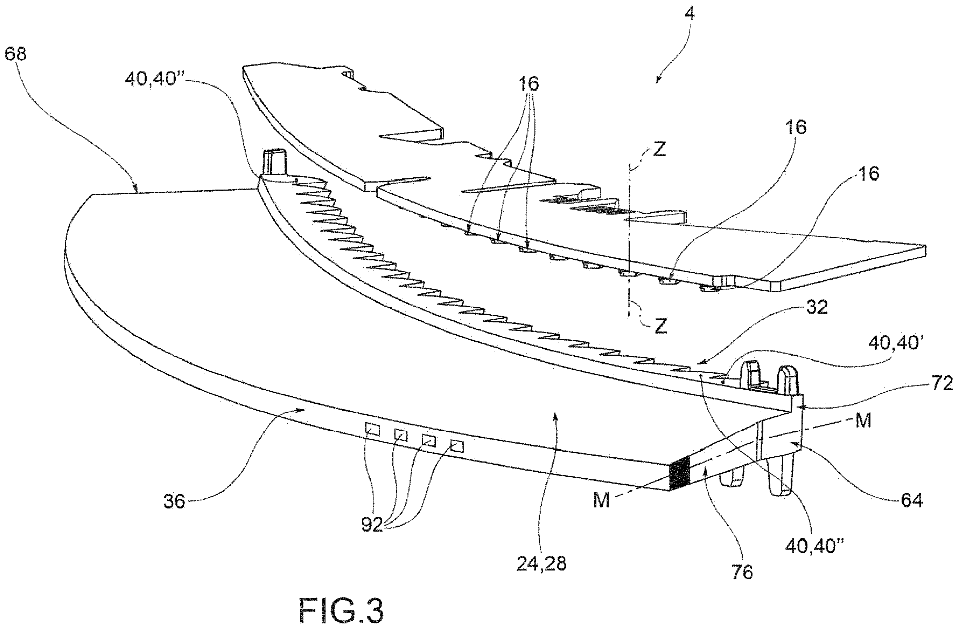

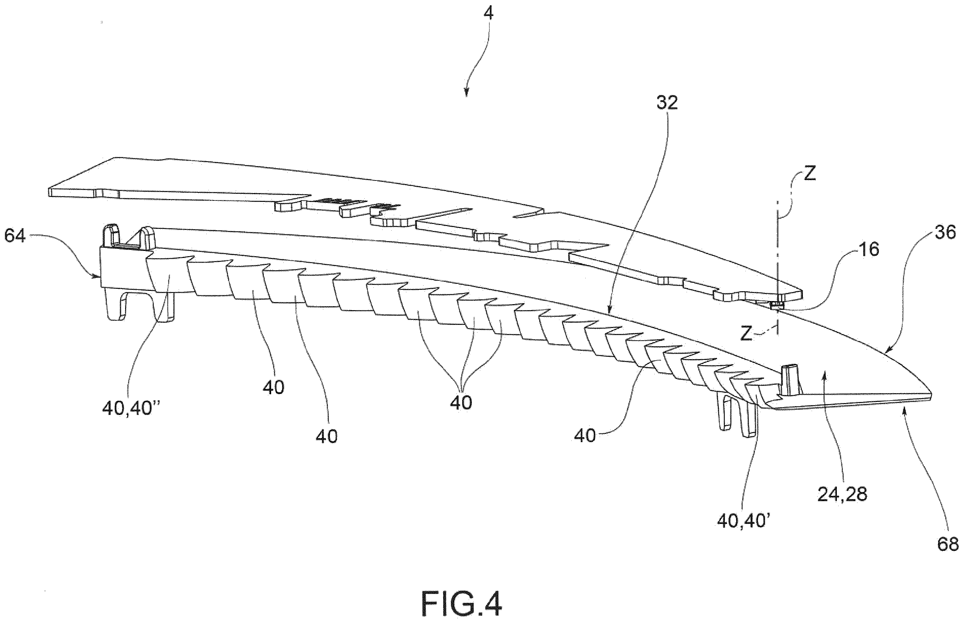

- figures 3-4 are perspective views from different angles, with parts separated, of components of a lighting device according to an embodiment of the present invention;

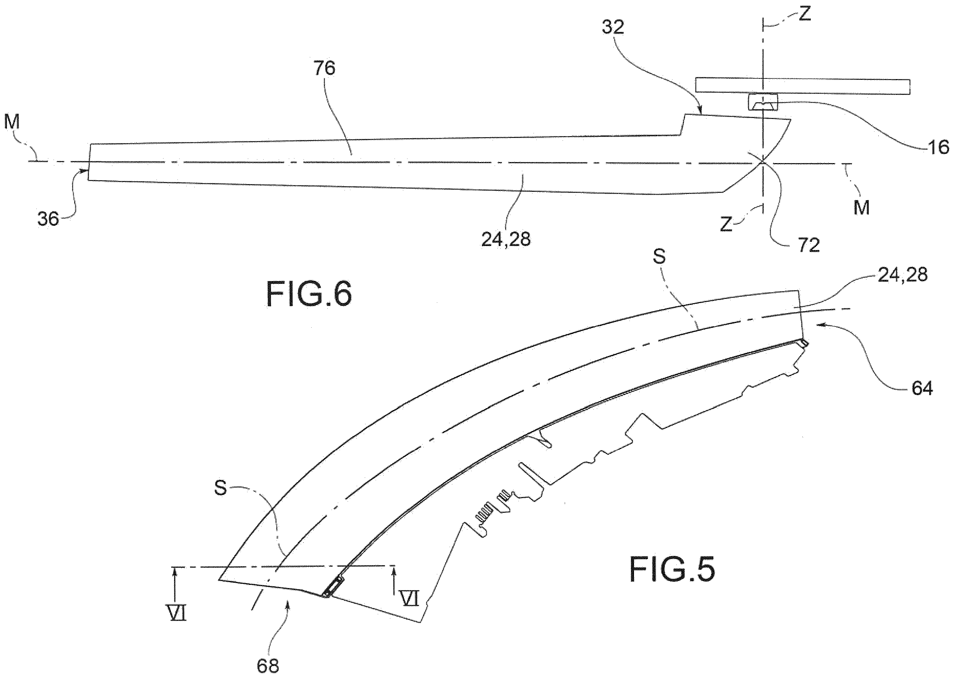

- figure 5 is a plan view, in assembled configuration, of the components of the device in figures 3-4;

- figure 6 is a section view of the device in figure 5, taken along section plane VI-VI in figure 5;

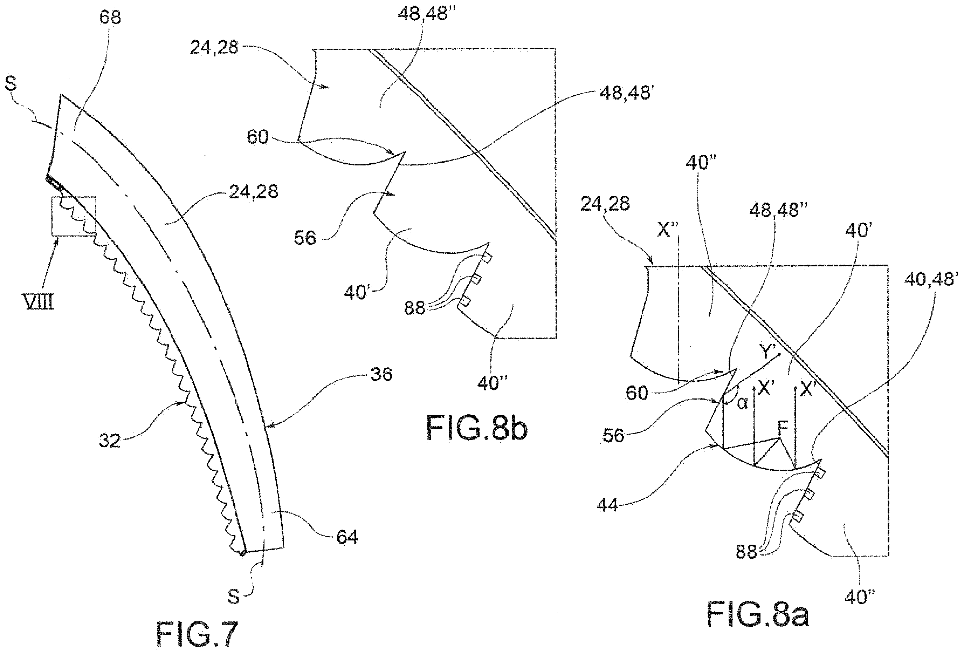

- figure 7 is a plan view, in assembled configuration, of the components of a lighting device according to the following invention;

- figures 8a-8b show enlarged views, with or without indication of the light rays of detail VIII of figure 7;

- figures 9-10 show section and plan views of a lighting device according to a further embodiment of the present invention.

Elements or parts in common to the embodiments described below will be indicated using the same reference numerals.

### DETAILED DESCRIPTION

With reference to the aforesaid figures, reference numeral 4 indicates a lighting device for vehicles as a whole, such as for example an automotive light, to which reference will be made hereinafter without because of this losing in generality.

As mentioned above, the expression "automotive light" means either an automotive rear light or an automotive front light, the latter also known as headlight or headlamp. As known, the automotive light comprises at least one light external to the vehicle having the function of illuminating and/or signaling, such as for example a position light, which may be a front position light, a tail light, a side marker, a turn signal, a brake light, a rear fog lamp, a main beam headlamp, a dipped beam headlamp, and the like.

However, it is understood that, in the scope of the present invention, lighting device for vehicles generically means any lighting and/or signaling device of a vehicle comprising at least one light of the vehicle having the function of illuminating and/or signaling.

Furthermore, also the definition of automotive-type lighting device must be understood in generic sense, comprising a lighting device adapted to be used on any type of locomotion vehicle.

The lighting device 4 comprises a container body 8, usually made of polymeric material, which allows to fix the lighting device 4 to the respective vehicle.

The container body 8 delimits a containment seat 12 which houses at least one light source 16, electrically connected to electrical connection means for powering it, and adapted to emit a light beam to be propagated outside the lighting device 4. For the purposes of the present invention, different types of light sources 16 may be used; preferably, the lighting source comprises at least one light-emitting diode (LED), e.g. a plurality of light-emitting diodes mounted on an electronic base.

The lighting device 4 further comprises a lenticular body 20, arranged to close the containment seat 12 and adapted to transmit the light beam produced by the light source 16 towards the outside of the lighting device 4.

The lenticular body 20 is made at least partially of transparent or semitransparent or translucent material, and may also comprise an opaque portion, so that it can be crossed by the light beam produced by the light source.

The lighting device is further provided with a light guide 24 comprising a light guide body 28 which extends from a light inlet wall 32 to a light outlet wall 36. The light inlet wall 32 of the light guide 24 faces the light source 16, e.g. the plurality of light-emitting diodes, so that a light beam 44 produced by the light source 16 can enter from the light inlet wall 32, propagate along the light guide body 28, thus satisfying the total internal reflection condition, and exit from the light outlet wall 36 facing the lenticular body 20.

The light guide body 28 can thus convey the light beams 44 to the light outlet wall 36 along the main propagation direction X-X. The light beams 44 are indeed reflected between the faces of the light guide body 28, thus satisfying the total internal reflection condition.

Advantageously, the light guide body 28 comprises at least one focusing element 40 at said light inlet wall 32. Such focusing element 40 is structured so as to collimate the beam 44 emitted by the light source 16 along a main propagation direction X-X, by directing such beam 44 towards the light outlet wall 36 of the light guide 24.

The light guide body 28 further comprises at least one reflecting wall 48 arranged adjacent to said focusing element 40. The reflecting wall 48 is structured so as to receive a portion of said light beam 44 collimated by the focusing element 40 and to reflect said portion of light beam 44 towards the light outlet wall 36 along a secondary propagation direction Y-Y, incident with the main propagation direction X-X according to an angle of incidence α, thus satisfying the condition of total internal reflection.

Said angle of incidence α is preferably comprised between 0 and 70 degrees.

Preferably, the light guide body 28 comprises at least one pair of focusing elements 40', 40", adjacent to each other, in which each focusing element 40', 40" is provided with a respective adjacent reflective wall 48, 48', 48", each focusing element 40', 40" having a main optical axis defining a respective main propagation direction X'-X',X"X", each reflective wall 48', 48" being shaped so as to receive, at least partially, the light beam 44 collimated by the respective focusing element 40', 40" and to reflect it towards the light outlet wall 36 in a secondary propagation direction Y'-Y',Y"-Y", incident with the main propagation direction X'-X', X"-X" of the respective focusing element according to a related angle of incidence α.

Preferably, the light guide body 28 comprises a plurality of focusing elements, e.g. focusing elements 40', 40", 40n adjacent to one another, in which each focusing element 40', 40", 40n is provided with a respective adjacent reflecting wall 48',48",48n, each focusing element 40', 40", 40n having its own main optical axis, defining a respective main propagation direction X'-X',X"-X",Xn-Xn.

Each reflecting wall 48',48",48n is shaped so as to receive, at least partially, the light beam 44 collimated by the respective focusing element 40',40",40n and to reflect it towards the light outlet wall 36, thus satisfying the total reflection condition, along a respective secondary propagation direction Y'-Y',Y"-Y",Yn-Yn incident with the main propagation direction X'-X', X"-X", Xn-Xn of the respective focusing element 40', 40", 40n according to a respective angle of incidence α, α', α", ..., αn.

According to an embodiment, the light guide body 28 comprises at least one first and one second focusing element 40', 40" arranged according to respective main propagation directions X'-X',X"-X" parallel to each other, and a first and a second reflecting wall 48', 48" associated to the first and second focusing element 40', 40", respectively. Such first and second reflecting walls 48', 48" are arranged to reflect a respective first and second light beam 44 emitted by said first and second focusing element 40', 40", along respective secondary propagation directions Y'-Y', Y"-Y", which may be parallel to each other or even incident.

According to an embodiment, the light guide body 28 comprises a plurality of focusing elements 40', 40", 40n having optical axes arranged according to respective main propagation directions X'-X', X"-X", Xn-Xn, some of them being mutually angled progressively according to predetermined angles, in order to pass from a first main propagation direction X'-X' to a last main propagation direction Xn-Xn, which identifies a predetermined angle, for example of 30 degrees, with the first main propagation direction X'-X'.

In the case in point, a predetermined number of focusing elements is oriented along a same direction to satisfy photometric requirements while the remaining focusing elements have their respective optical axes angled progressively to one another according to predetermined angles.

According to an embodiment, a first and second focusing element 40, 40' adjacent to each other are arranged and configured so that a first inner portion 56 of a first focusing device 40' is hidden by the second inner portion 60 of the second focusing device 40" along said main propagation direction X-X and wherein respective adjacent ends 52', 52" of the first and second focusing element 40', 40" are joined by means of said reflective wall 48, inclined with respect to the main propagation direction X-X, so as to reflect light towards the secondary propagation direction Y-Y.

Preferably, the reflective walls 48, 48', 48", 48n are concealed by the respective inner portions of the focusing elements, along said main propagation directions X-X, so as not to be visible by an external observer positioned along the same main propagation directions X-X.

In this manner, the external observer cannot see the reflecting walls which would otherwise originate more illuminated points or however unevenness of the lighting of the light outlet wall 36. Thus, the light outlet wall 36 is evenly illuminated despite having a plurality of surfaces which are mutually inclined/angled upstream, i.e. on the light inlet wall.

Preferably, the light guide body 28 is a light guide plate having the shape of an arc from a first end 64 to a second end 68 along a curvilinear abscissa S-S, with respect to a median plane M-M of prevailing extension of the light guide body 28.

According to a possible embodiment of the present invention, the light source 16 is arranged in overlapping position with respect to the light guide body 28 so as to direct the light beam 44 emitted according to a prevailing emission direction Z-Z perpendicular to the light inlet wall 32, said light inlet wall 32 being preferably a flat wall.

For example, said light source 16 is arranged at a perpendicular line passing through a focal point F of said focusing element 40.

It is also possible to have the light source 16 arranged in an offset or out of focus position with respect to a perpendicular line passing through a focal point F of said focusing element 40. In this manner, the distribution of a small amount of light beam 44 is ensured, for example, in the main propagation direction X-X and a greater amount of light beam 44 in the secondary propagation direction Y-Y.

Preferably, the light guide body 28 is a light guide plate having a median plane M-M of prevailing extension, in which, with respect to a section plane perpendicular to said median plane, the light guide body 28 has an "L"-shaped conformation having two branches which are substantially perpendicular to each other, in which a first branch 72 comprises the light inlet wall 32 and a second branch 76 comprises the light outlet wall 36.

Preferably, the focusing elements 40 comprise paraboloid and/or ellipsoid elements.

Preferably, said paraboloid or ellipsoid elements are arranged at said first branch 72 and develop substantially perpendicularly to the light inlet wall 32.

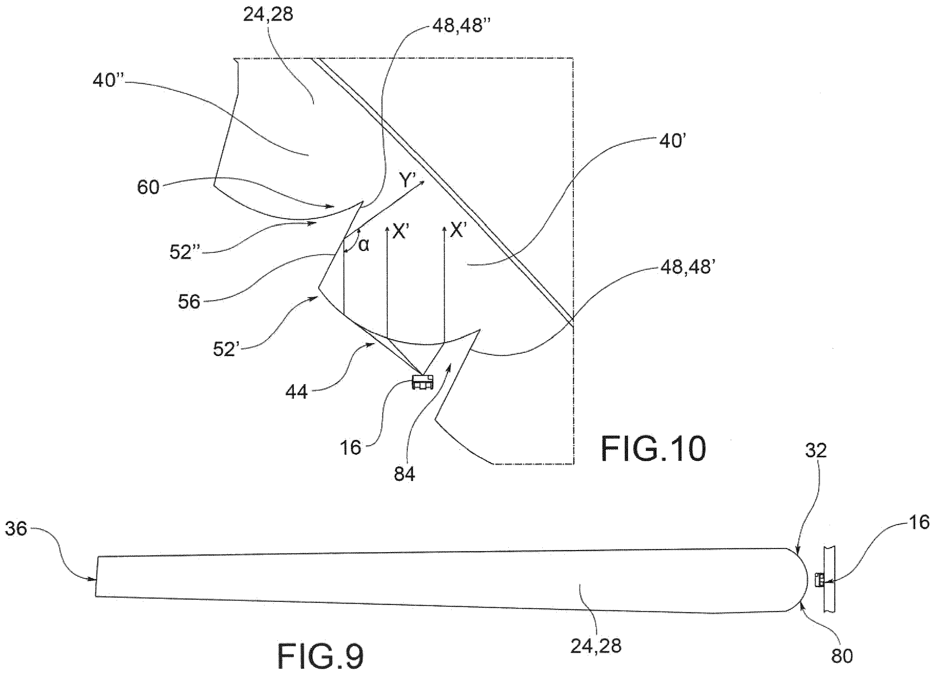

According to a further embodiment of the present invention (figures 9-10), the light source 16 is arranged in rear position with respect to the light guide body 28, on side opposite to the light outlet wall 36, so as to direct the light beam 44 onto a convex wall 80 of the focusing element 40 defining said light inlet wall 32.

Preferably, the convex wall 80 is a wall of a paraboloid and/or ellipsoid element.

For example, the light source 16 may be arranged in a recess 84 obtained between either said paraboloid and/or ellipsoid element and a corresponding reflective wall 48.

According to the present invention, the reflective wall 48 is a flat wall. It is also possible to provide a free-form wall as reflective wall, so as to direct the reflected light towards more than one secondary propagation direction Y-Y.

Furthermore, the reflective walls 48 are shaped so as to generate a light front on the light outlet wall 36 of the light guide body 28 which extends without interruption.

According to an embodiment, the light guide body 28, at said reflective wall 48, comprises optics 88 shaped so as to open the light beam directed from the reflective wall 48.

According to an embodiment, the light outlet wall 36 of the light guide body 28 is provided with optics 92 adapted to open the light beam exiting from the light guide body 28.

As can be appreciated from the description above, the lighting device according to the invention allows to overcome the drawbacks presented in the prior art.

Indeed, the lighting device according to the present invention can provide a lighting surface which emits light along a first main direction, ensuring a given photometry, and in a secondary direction, incident with said main direction, so as to ensure a lighting evenness both along the main direction and along the secondary direction. Such effect is obtained with small dimensions and using a light guide, preferably but not necessarily of flat type.

It is thus possible to open the beam as desired and ensure the visibility thereof also from rather high angles with respect to the main direction.

This technical advantage is very useful in the case of turn signals, which normally have a curvilinear extension from a first end, facing towards a longitudinal direction, to a second end facing a transversal direction perpendicular to said longitudinal direction.

The same advantage obviously applies to any further optical function of the light, such as, for example, the function of brake light or the function of position lights.

By virtue of the present invention, it is possible to observe the light guide from different angles without having dark portions or however portions of uneven intensity along the light outlet surface of the lighting device. It is thus possible to overcome the drawbacks and the geometric/dimensional limitations of the solutions of the prior art.

A person skilled in art can make numerous changes and variants to the lighting devices described above, all contained within the scope of protection defined by the following claims, in order to satisfy contingent, specific needs.

## Claims

1. Lighting device for vehicles (4) comprising
- a container body (8) that delimits a containment seat (12) that houses at least one light source (16), particularly of the LED type, structured so as to emit a light beam (44) when powered with electricity,
- a lenticular body (20), disposed to close the containment seat (12) and suitable to be crossed by said light beam produced by the light source (16),
- a light guide (24) comprising a light guide body (28) that extends from a light inlet wall (32), facing said light source (16), to a light exit wall (36) facing said lenticular body (20), said light guide (24) being suitable to propagate said light beam (44) inside it, said light beam (44) entering from the light inlet wall (32) and exiting from the light outlet wall (36), facing the lenticular body (20),
**characterized in that**
- the light guide body (28) comprises, in correspondence of said light inlet wall (32), at least one focusing element (40) suitable to collimate along a main propagation direction (X-X) towards the light outlet wall (36) the light beam (44) emitted by the source light (16),
and **in that** said light guide body (28) comprises at least one reflecting wall (48), disposed adjacent to said focusing device (40), said reflecting wall (48) being structured to receive a portion of said light beam (44) collimated by the focusing device (40) and to reflect it, satisfying the condition of total internal reflection on the reflecting wall (48) itself, towards the light outlet wall (36) along a secondary propagation direction (Y-Y), incident with the main propagation direction (X-X) according to an angle of incidence (α).

2. Lighting device (4) according to claim 1, wherein the light guide body (28) comprises a plurality of focusing elements (40', 40", 40n) adjacent to each other, wherein each focusing element (40', 40", 40n) is provided with a respective adjacent reflective wall (48', 48", 48n), each focusing element (40', 40", 40n) having a main optical axis defining a respective main propagation direction (X'-X', X"- X", Xn-Xn), each reflective wall (48', 48", 48n) being shaped so as to receive, at least partially, the light beam (44) collimated by the respective focusing element (40', 40", 40n) and to reflect it towards the light outlet wall (36) in a secondary propagation direction (Y'-Y', Y" - Y", Yn-Yn) incident with the main propagation direction (X'-X', X"-X", Xn-Xn) of the respective focusing element (40', 40", 40n) according to a related angle of incidence (α', α", αn).

3. Lighting device (4) according to claim 2, wherein the adjacent focusing elements (40, 40', 40", 40n) are arranged and configured so that a first inner portion (56) of a first focusing element (40') is hidden by a second inner portion (60) of a second focusing element (40") along said main propagation direction (X-X) and wherein respective adjacent ends (52', 52") of the first and second focusing element (40', 40") are joined by means of said reflective wall (48), inclined with respect to the main propagation direction (X-X), so as to reflect light towards the secondary propagation direction (Y-Y), said reflective walls (48, 48', 48", 48n) being concealed by the respective inner portions (56, 60) of the focusing elements (40, 40', 40", 40n, along said main propagation directions (X'-X', X"- X", Xn-Xn).

4. Lighting device (4) according to any of the preceding claims, wherein the light guide body (28) comprises at least a first and a second focusing element (40', 40") arranged according to respective main propagation directions (X'-X', X" - X") parallel to each other, and a first and a second reflective wall (48', 48") respectively associated to said first and second focusing element (40', 40"), said first and second reflective wall (48', 48") being suitable to reflect a first and a second light beam (44) respectively collimated by said first and second focusing element (40', 40") according to secondary propagation directions (Y'-Y', Y"-Y") parallel, or incident, with each other.

5. Lighting device (4) according to any of the preceding claims, wherein the light guide body (28) comprises at least three focusing elements (40', 40", 40n) having optical axes arranged according to respective main propagation directions (X'-X', X"-X", Xn-Xn) angled progressively between them according to pre-set angles, in order to pass from a first main propagation direction (X'-X') to a last main propagation direction (Xn-Xn) which identifies, with the first main propagation direction (X'-X') an angle of about 90 degrees.

6. Lighting device (4) according to any of the preceding claims, wherein the light guide body (28) is a light guide plate having the shape of an arc from a first to a second end (64, 68), along a curvilinear abscissa (S-S), with respect to a median plane (M-M) of prevalent extension of the light guide body (28).

7. Lighting device (4) according to any of the preceding claims, wherein the light source (16) is disposed in overlapping position with respect to the light guide body (28) so as to direct the light beam (44) emitted in a prevailing emission direction (Z-Z) perpendicular to the light inlet wall (32), said light input wall (32) being a flat wall.

8. Lighting device (4) according to claim 7, wherein said light source (16) is arranged in correspondence of a perpendicular line passing through a focal point (F) of said focusing device (40).

9. Lighting device (4) according to claim 7, wherein said light source (16) is arranged in an offset or out of focus position with respect to a perpendicular line passing through a focal point (F) of said focusing device (40).

10. Lighting device (4) according to any of the preceding claims, wherein the light guide body (28) is a light guide plate having a median plane (M-M) of prevailing extension, wherein, with respect to a section plane perpendicular to said the median plane (M-M), the light guide body (28) has an 'L' shape having two branches substantially perpendicular to each other, wherein a first branch (72) comprises the light inlet wall (32) and a second branch (76) comprises the light outlet wall (36).

11. Lighting device (4) according to any of the preceding claims, wherein said focusing elements (40', 40", 40n) comprise element paraboloid and/or ellipsoid elements, wherein said paraboloid or ellipsoid elements are arranged in correspondence of said first branch (72) and extend substantially perpendicularly to said light inlet wall (32).

12. Lighting device (4) according to any of claims 1 to 9, wherein the light source (16) is disposed in a rear position with respect to the light guide body (28), on the side opposite to the light outlet wall (36), so as to direct the light beam (44) on a convex wall (80) of the focusing element (40) defining said light inlet wall (32).

13. Lighting device (4) according to claim 12, wherein said convex wall (80) is a wall of a paraboloid and/or ellipsoid element, wherein the light source (16) is arranged in a recess (84) formed between a said paraboloid and/or ellipsoid element and a corresponding reflective wall (48).

14. Lighting device (4) according to any of the preceding claims, wherein the reflective wall (48) is a flat wall.

15. Lighting device (4) according to any of claims 1 to 13, wherein the reflective wall (48) is a free-form wall, so as to direct the reflected light towards more than one secondary propagation direction (Y-Y).

16. Lighting device (4) according to any of the preceding claims, wherein the reflective walls (48', 48", 48n) are shaped so as to generate a light front on the light outlet wall (36) of the light guide body (28) that extends without interruption.

17. Lighting device (4) according to any of the preceding claims, wherein the light guide body (28), in correspondence of said reflective wall, comprises optics shaped so as to open the light beam directed from said reflective wall.

18. Lighting device (4) according to any of the preceding claims, wherein the light outlet wall (36) of the light guide body (28) is provided with optics (92) suitable to open the light beam output by the light guide body (28).

## Patentansprüche

1. Beleuchtungsvorrichtung für Fahrzeuge (4), umfassend
- einen Behälterkörper (8), der einen Unterbringungssitz (12) abgrenzt, der mindestens eine Lichtquelle (16), insbesondere vom LED-Typ, aufnimmt, die so strukturiert ist, dass sie einen Lichtstrahl (44) emittiert, wenn sie mit Strom versorgt wird,
- einen linsenartigen Körper (20), der so angeordnet ist, dass er den Unterbringungssitz (12) verschließt, und dafür geeignet ist, von dem Lichtstrahl, der von der Lichtquelle (16) erzeugt wird, durchquert zu werden,
- einen Lichtleiter (24), der einen Lichtleiterkörper (28) umfasst, der sich von einer Lichteintrittswand (32), die der Lichtquelle (16) zugewandt ist, zu einer Lichtaustrittswand (36), die dem Linsenkörper (20) zugewandt ist, erstreckt, wobei der Lichtleiter (24) dafür geeignet ist, den Lichtstrahl (44) in seinem Inneren auszubreiten, wobei der Lichtstrahl (44) von der Lichteintrittswand (32) eintritt und aus der Lichtaustrittswand (36), die dem Linsenkörper (20) zugewandt ist, austritt,
**dadurch gekennzeichnet, dass**
- der Lichtleiterkörper (28), in Übereinstimmung mit der Lichteintrittswand (32), mindestens ein Fokussierelement (40) umfasst, das dafür geeignet ist, den Lichtstrahl (44), der von dem Lichtquelle (16) emittiert wird, entlang einer Hauptausbreitungsrichtung (X-X) hin zu der Lichtaustrittswand (36) zu bündeln,
und dadurch, dass der Lichtleiterkörper (28) mindestens eine reflektierende Wand (48) umfasst, die benachbart zu der Fokussiervorrichtung (40) angeordnet ist, wobei die reflektierende Wand (48) so strukturiert ist, dass sie einen Teil des Lichtstrahls (44), der von der Fokussiervorrichtung (40) gebündelt wird, empfängt und ihn, unter Erfüllung der Bedingung innerer Totalreflexion an der reflektierenden Wand (48) selbst, hin zu der Lichtaustrittswand (36) entlang einer sekundären Ausbreitungsrichtung (Y-Y) reflektiert, die gemäß einem Einfallswinkel (α) einfallend mit der Hauptausbreitungsrichtung (X-X) ist.

2. Beleuchtungsvorrichtung (4) nach Anspruch 1, wobei der Lichtleiterkörper (28) eine Vielzahl von zueinander benachbarten Fokussierelementen (40', 40", 40n) umfasst, wobei jedes Fokussierelement (40', 40", 40n) mit einer jeweiligen benachbarten reflektierenden Wand (48', 48", 48n) versehen ist, wobei jedes Fokussierelement (40', 40", 40n) eine optische Hauptachse aufweist, die eine jeweilige Hauptausbreitungsrichtung (X'-X', X"-X", Xn-Xn) bestimmt, wobei jede reflektierende Wand (48', 48", 48n) so geformt ist, dass sie, zumindest teilweise, den Lichtstrahl (44) empfängt, der von dem jeweiligen Fokussierelement (40', 40", 40n) gebündelt wird, und ihn hin zu der Lichtaustrittswand (36) in einer zweiten Ausbreitungsrichtung (Y'-Y', Y"-Y", Yn-Yn) reflektiert, die gemäß einem verwandten Einfallswinkel (α', α", αn) einfallend mit der Hauptausbreitungsrichtung (X'-X', X"-X", Xn-Xn) des jeweiligen Fokussierelements (40', 40", 40n) ist.

3. Beleuchtungsvorrichtung (4) nach Anspruch 2, wobei die benachbarten Fokussierelemente (40, 40', 40", 40n) so angeordnet und ausgestaltet sind, dass ein erster Innenabschnitt (56) eines ersten Fokussierelements (40') von einem zweiten Innenabschnitt (60) eines zweiten Fokussierelements (40") entlang der Hauptausbreitungsrichtung (X-X) verborgen wird, und wobei jeweilige benachbarte Enden (52', 52") des ersten und des zweiten Fokussierelements (40', 40") mittels der reflektierenden Wand (48), die in Bezug auf die Hauptausbreitungsrichtung (X-X) geneigt ist, zusammengefügt sind, sodass sie Licht hin zu der zweiten Ausbreitungsrichtung (Y-Y) reflektieren, wobei die reflektierenden Wände (48, 48', 48", 48n) von den jeweiligen Innenabschnitten (56, 60) der Fokussierelemente (40, 40', 40", 40n) entlang der Hauptausbreitungsrichtungen (X'-X', X"-X", Xn-Xn) verdeckt werden.

4. Beleuchtungsvorrichtung (4) nach einem beliebigen der vorhergehenden Ansprüche, wobei der Lichtleiterkörper (28) mindestens ein erstes und ein zweites Fokussierelement (40', 40"), die gemäß jeweiligen Hauptausbreitungsrichtungen (X'-X', X"-X") parallel zueinander angeordnet sind, und eine erste und eine zweite reflektierende Wand (48', 48"), die jeweils dem ersten und dem zweiten Fokussierelement (40', 40") zugeordnet sind, umfasst, wobei die erste und die zweite reflektierende Wand (48', 48") dafür geeignet sind, einen ersten und einen zweiten Lichtstrahl (44) zu reflektieren, die jeweils von dem ersten und dem zweiten Fokussierelement (40', 40") gemäß sekundären Ausbreitungsrichtungen (Y'-Y', Y"-Y"), die parallel oder einfallend zueinander sind, gebündelt werden.

5. Beleuchtungsvorrichtung (4) nach einem beliebigen der vorhergehenden Ansprüche, wobei der Lichtleiterkörper (28) mindestens drei Fokussierelemente (40', 40", 40n) umfasst, die optische Achsen aufweisen, die gemäß jeweiligen Hauptausbreitungsrichtungen (X'-X', X"-X", Xn-Xn) mit zunehmenden Winkeln zwischen ihnen gemäß voreingestellten Winkeln angeordnet sind, um von einer ersten Hauptausbreitungsrichtung (X'-X') zu einer letzten Hauptausbreitungsrichtung (Xn-Xn) zu verlaufen, die mit der ersten Hauptausbreitungsrichtung (X'-X') einen Winkel von etwa 90 Grad bestimmt.

6. Beleuchtungsvorrichtung (4) nach einem beliebigen der vorhergehenden Ansprüche, wobei der Lichtleiterkörper (28) eine Lichtleiterplatte ist, die die Form eines Bogens von einem ersten zu einem zweiten Ende (64, 68) entlang einer krummlinigen Abszisse (S-S) in Bezug auf eine Mittelebene (M-M) der vorherrschenden Erstreckung des Lichtleiterkörpers (28) aufweist.

7. Beleuchtungsvorrichtung (4) nach einem beliebigen der vorhergehenden Ansprüche, wobei die Lichtquelle (16) in einer überlappenden Position in Bezug auf den Lichtleiterkörper (28) angeordnet ist, sodass sie den Lichtstrahl (44), der in einer vorherrschenden Emissionsrichtung (Z-Z) emittiert wird, senkrecht zu der Lichteintrittswand (32) lenkt, wobei die Lichteintrittswand (32) eine flache Wand ist.

8. Beleuchtungsvorrichtung (4) nach Anspruch 7, wobei die Lichtquelle (16) in Übereinstimmung mit einer senkrechten Linie angeordnet ist, die durch einen Brennpunkt (F) der Fokussiervorrichtung (40) verläuft.

9. Beleuchtungsvorrichtung (4) nach Anspruch 7, wobei die Lichtquelle (16) in einer versetzten oder nicht fokussierten Position in Bezug auf eine senkrechte Linie angeordnet ist, die durch einen Brennpunkt (F) der Fokussiervorrichtung (40) verläuft.

10. Beleuchtungsvorrichtung (4) nach einem beliebigen der vorhergehenden Ansprüche, wobei der Lichtleiterkörper (28) eine Lichtleiterplatte ist, die eine Mittelebene (M-M) vorherrschender Ausdehnung aufweist, wobei der Lichtleiterkörper (28), in Bezug auf eine Schnittebene, die senkrecht zu der Mittelebene (M-M) ist, eine ,L'-Form aufweist, die zwei Zweige aufweist, die im Wesentlichen senkrecht zueinander sind, wobei ein erster Zweig (72) die Lichteintrittswand (32) umfasst und ein zweiter Zweig (76) die Lichtaustrittswand (36) umfasst.

11. Beleuchtungsvorrichtung (4) nach einem beliebigen der vorhergehenden Ansprüche, wobei die Fokussierelemente (40', 40", 40n) Paraboloid- und/oder Ellipsoidelemente umfassen, wobei die Paraboloid- oder Ellipsoidelemente in Übereinstimmung mit dem ersten Zweig (72) angeordnet sind und sich im Wesentlichen senkrecht zu der Lichteintrittswand (32) erstrecken.

12. Beleuchtungsvorrichtung (4) nach einem beliebigen der Ansprüche 1 bis 9, wobei die Lichtquelle (16) in einer hinteren Position in Bezug auf den Lichtleiterkörper (28), auf der Seite, die entgegengesetzt zu der Lichtaustrittswand (36) ist, angeordnet ist, sodass sie den Lichtstrahl (44) auf eine konvexe Wand (80) des Fokussierelements (40) lenkt, die die Lichteintrittswand (32) bestimmt.

13. Beleuchtungsvorrichtung (4) nach Anspruch 12, wobei die konvexe Wand (80) eine Wand aus einem Paraboloid- und/oder Ellipsoidelement ist, wobei die Lichtquelle (16) in einer Aussparung (84) angeordnet ist, die zwischen dem Paraboloid- und/oder Ellipsoidelement und einer entsprechenden reflektierenden Wand (48) gebildet ist.

14. Beleuchtungsvorrichtung (4) nach einem beliebigen der vorhergehenden Ansprüche, wobei die reflektierende Wand (48) eine flache Wand ist.

15. Beleuchtungsvorrichtung (4) nach einem beliebigen der Ansprüche 1 bis 13, wobei die reflektierende Wand (48) eine Freiformwand ist, sodass sie das reflektierte Licht hin zu mehr als einer sekundären Ausbreitungsrichtung (Y-Y) lenkt.

16. Beleuchtungsvorrichtung (4) nach einem beliebigen der vorhergehenden Ansprüche, wobei die reflektierenden Wände (48', 48", 48n) so geformt sind, dass sie eine Lichtfront an der Lichtaustrittswand (36) des Lichtleiterkörpers (28) erzeugen, die sich ohne Unterbrechung erstreckt.

17. Beleuchtungsvorrichtung (4) nach einem beliebigen der vorhergehenden Ansprüche, wobei der Lichtleiterkörper (28), in Übereinstimmung mit der reflektierenden Wand, Optik umfasst, die so geformt ist, dass sie den Lichtstrahl, der von der reflektierenden Wand aus gelenkt wird, öffnet.

18. Beleuchtungsvorrichtung (4) nach einem beliebigen der vorhergehenden Ansprüche, wobei die Lichtaustrittswand (36) des Lichtleiterkörpers (28) mit Optik (92) versehen ist, die dafür geeignet ist, den Lichtstrahl, der von dem Lichtleiterkörper (28) ausgegeben wird, zu öffnen.

## Revendications

1. Dispositif d'éclairage pour véhicules (4) comprenant
- un corps de récipient (8) qui délimite un siège de confinement (12) qui loge au moins une source de lumière (16), particulièrement du type DEL, structurée de façon à émettre un faisceau lumineux (44) lorsqu'elle est alimentée en électricité,
- un corps lenticulaire (20), disposé pour fermer le siège de confinement (12) et approprié pour être traversé par ledit faisceau lumineux produit par la source de lumière (16),
- un guide de lumière (24) comprenant un corps de guide de lumière (28) qui s'étend d'une paroi d'entrée de lumière (32), faisant face à ladite source de lumière (16), à une paroi de sortie de lumière (36) faisant face audit corps lenticulaire (20), ledit guide de lumière (24) étant approprié pour propager ledit faisceau lumineux (44) à l'intérieur de celui-ci, ledit faisceau lumineux (44) entrant à partir de la paroi d'entrée de lumière (32) et sortant de la paroi de sortie de lumière (36), en face du corps lenticulaire (20),
**caractérisé en ce que**
- le corps de guide de lumière (28) comprend, en correspondance avec ladite paroi d'entrée de lumière (32), au moins un élément de focalisation (40) approprié pour collimater le long d'une direction de propagation principale (X-X) vers la paroi de sortie de lumière (36) le faisceau lumineux (44) émis par la lumière de source (16),
et **en ce que** ledit corps de guide de lumière (28) comprend au moins une paroi réfléchissante (48), disposée de façon adjacente audit dispositif de focalisation (40), ladite paroi réfléchissante (48) étant structurée pour recevoir une portion dudit faisceau lumineux (44) collimaté par le dispositif de focalisation (40) et pour la réfléchir, satisfaisant la condition de réflexion interne totale sur la paroi réfléchissante (48) elle-même, vers la paroi de sortie de lumière (36) le long d'une direction de propagation secondaire (Y-Y), incidente avec la direction de propagation principale (X-X) selon un angle d'incidence (α).

2. Dispositif d'éclairage (4) selon la revendication 1, dans lequel le corps de guide de lumière (28) comprend une pluralité d'éléments de focalisation (40', 40", 40n) adjacents les uns aux autres, dans lequel chaque élément de focalisation (40', 40", 40n) est doté d'une paroi réfléchissante (48', 48", 48n) adjacente respective, chaque élément de focalisation (40', 40", 40n) ayant un axe optique principal définissant une direction de propagation principale (X'-X', X"-X", Xn-Xn) respective, chaque paroi réfléchissante (48', 48", 48n) étant façonnée de façon à recevoir, au moins partiellement, le faisceau lumineux (44) collimaté par l'élément de focalisation (40', 40", 40n) respectif et pour le réfléchir vers la paroi de sortie de lumière (36) dans une direction de propagation secondaire (Y'-Y', Y"-Y", Yn-Yn) incidente avec la direction de propagation principale (X'-X', X"-X", Xn-Xn) de l'élément de focalisation (40', 40", 40n) respectif selon un angle d'incidence (α', α", αn) apparenté.

3. Dispositif d'éclairage (4) selon la revendication 2, dans lequel les éléments de focalisation (40, 40', 40", 40n) adjacents sont agencés et configurés de sorte qu'une première portion interne (56) d'un premier élément de focalisation (40') est cachée par une seconde portion interne (60) d'un second élément de focalisation (40") le long de ladite direction de propagation principale (X-X) et dans lequel les extrémités (52', 52") adjacentes respectives du premier et du second élément de focalisation (40', 40") sont jointes au moyen de ladite paroi réfléchissante (48), inclinée par rapport à la direction de propagation principale (X-X), de façon à réfléchir la lumière vers la direction de propagation secondaire (Y-Y), lesdites parois réfléchissantes (48, 48', 48", 48n) étant masquées par les portions internes (56, 60) respectives des éléments de focalisation (40, 40', 40", 40n), le long desdites directions de propagation principales (X'-X', X"-X", Xn-Xn).

4. Dispositif d'éclairage (4) selon l'une quelconque des revendications précédentes, dans lequel le corps de guide de lumière (28) comprend au moins un premier et un second élément de focalisation (40', 40") agencés selon des directions de propagation principales (X'-X', X"-X") respectives parallèles les unes aux autres, et une première et une seconde paroi réfléchissante (48', 48") respectivement associées audit premier et second élément de focalisation (40', 40"), lesdites première et seconde paroi réfléchissante (48', 48") étant appropriées pour réfléchir un premier et un second faisceau lumineux (44) respectivement collimatés par lesdits premier et second élément de focalisation (40', 40") selon des directions de propagation secondaires (Y'-Y', Y"-Y") parallèles, ou incidentes, l'une par rapport à l'autre.

5. Dispositif d'éclairage (4) selon l'une quelconque des revendications précédentes, dans lequel le corps de guide de lumière (28) comprend au moins trois éléments de focalisation (40', 40", 40n) ayant des axes optiques agencés selon des directions de propagation principales (X'-X', X"-X", Xn-Xn) respectives formant progressivement un angle entre eux selon des angles prédéfinis, afin de passer d'une première direction de propagation principale (X'-X') à une dernière direction de propagation principale (Xn-Xn) qui identifie, avec la première direction de propagation principale (X'-X') un angle d'environ 90 degrés.

6. Dispositif d'éclairage (4) selon l'une quelconque des revendications précédentes, dans lequel le corps de guide de lumière (28) est une plaque de guide de lumière ayant la forme d'un arc d'une première à une seconde extrémité (64, 68), le long d'une abscisse curviligne (S-S), par rapport à un plan médian (M-M) d'extension prévalente du corps de guide de lumière (28).

7. Dispositif d'éclairage (4) selon l'une quelconque des revendications précédentes, dans lequel la source de lumière (16) est disposée en position de chevauchement par rapport au corps de guide de lumière (28) de façon à diriger le faisceau lumineux (44) émis dans une direction d'émission dominante (Z-Z) perpendiculaire à la paroi d'entrée de lumière (32), ladite paroi d'entrée de lumière (32) étant une paroi plate.

8. Dispositif d'éclairage (4) selon la revendication 7, dans lequel ladite source de lumière (16) est agencée en correspondance avec une ligne perpendiculaire passant à travers un foyer (F) dudit dispositif de focalisation (40).

9. Dispositif d'éclairage (4) selon la revendication 7, dans lequel ladite source de lumière (16) est agencée dans une position de décalage ou de flou de foyer par rapport à une ligne perpendiculaire passant à travers un foyer (F) dudit dispositif de focalisation (40).

10. Dispositif d'éclairage (4) selon l'une quelconque des revendications précédentes, dans lequel le corps de guide de lumière (28) est une plaque de guide de lumière ayant un plan médian (M-M) d'extension dominante, dans lequel, par rapport à un plan de coupe perpendiculaire audit plan médian (M-M), le corps de guide de lumière (28) a une forme en « L » ayant deux branches sensiblement perpendiculaires l'une à l'autre, dans lequel une première branche (72) comprend la paroi d'entrée de lumière (32) et une seconde branche (76) comprend la paroi de sortie de lumière (36).

11. Dispositif d'éclairage (4) selon l'une quelconque des revendications précédentes, dans lequel lesdits éléments de focalisation (40', 40", 40n) comprennent des éléments paraboloïdes et/ou ellipsoïdes, dans lequel lesdits éléments paraboloïdes ou ellipsoïdes sont agencés en correspondance avec ladite première branche (72) et s'étendent sensiblement perpendiculairement à ladite paroi d'entrée de lumière (32).

12. Dispositif d'éclairage (4) selon l'une quelconque des revendications 1 à 9, dans lequel la source de lumière (16) est disposée dans une position arrière par rapport au corps de guide de lumière (28), sur le côté opposé à la paroi de sortie de lumière (36), de façon à diriger le faisceau lumineux (44) sur une paroi convexe (80) de l'élément de focalisation (40) définissant ladite paroi d'entrée de lumière (32).

13. Dispositif d'éclairage (4) selon la revendication 12, dans lequel ladite paroi convexe (80) est une paroi d'un élément paraboloïde et/ou ellipsoïde, dans lequel la source de lumière (16) est agencée dans un évidement (84) formé entre un dit élément paraboloïde et/ou ellipsoïde et une paroi réfléchissante (48) correspondante.

14. Dispositif d'éclairage (4) selon l'une quelconque des revendications précédentes, dans lequel la paroi réfléchissante (48) est une paroi plate.

15. Dispositif d'éclairage (4) selon l'une quelconque des revendications 1 à 13, dans lequel la paroi réfléchissante (48) est une paroi de forme libre, de façon à diriger la lumière réfléchie vers plus d'une direction de propagation secondaire (Y-Y).

16. Dispositif d'éclairage (4) selon l'une quelconque des revendications précédentes, dans lequel les parois réfléchissantes (48', 48", 48n) sont façonnées de façon à générer un front de lumière sur la paroi de sortie de lumière (36) du corps de guide de lumière (28) qui s'étend sans interruption.

17. Dispositif d'éclairage (4) selon l'une quelconque des revendications précédentes, dans lequel le corps de guide de lumière (28), en correspondance avec ladite paroi réfléchissante, comprend une optique façonnée de façon à ouvrir le faisceau lumineux dirigé à partir de ladite paroi réfléchissante.

18. Dispositif d'éclairage (4) selon l'une quelconque des revendications précédentes, dans lequel la paroi de sortie de lumière (36) du corps de guide de lumière (28) est dotée d'une optique (92) appropriée pour ouvrir le faisceau lumineux produit par le corps de guide de lumière (28).
